Europäisches Patentamt

European Patent Office

Office européen des brevets

(19)

(11) Veröffentlichungsnummer: **0 185 334**
**A2**

(12) # EUROPÄISCHE PATENTANMELDUNG

(21) Anmeldenummer: **85115978.0**

(22) Anmeldetag: **14.12.85**

(51) Int. Cl.⁴: **G 01 N 21/78**

(30) Priorität: **21.12.84 DE 3446756**

(43) Veröffentlichungstag der Anmeldung:
**25.06.86 Patentblatt 86/26**

(84) Benannte Vertragsstaaten:
**FR GB IT NL SE**

(71) Anmelder: **Betz, Michael Dr.**
**Hamburger Landstrasse**
**D-2300 Molfsee(DE)**

(72) Erfinder: **Betz, Michael Dr.**
**Hamburger Landstrasse**
**D-2300 Molfsee(DE)**

(74) Vertreter: **Tönnies, Jan G.**
**Niemannsweg 133**
**D-2300 Kiel 1(DE)**

(54) **Photometer zum Analysieren flüssiger Medien.**

(57) Photometer zum Analysieren flüssiger Medien, mit einer Küvette zur Aufnahme des zu untersuchenden Mediums, Mitteln zum Zuführen des zu analysierenden Mediums, Mitteln zum Zuführen der zuzugebenden Reagenzien, Mitteln zum Abführen der gemessenen Reaktionsprodukte, einer Lichtquelle zum Aussenden von Licht einer bestimmten Wellenlänge und einem photoelektrischen Empfänger, wobei die Küvette als Pumpküvette mit Zylinder (10), Zylinderkopf (12) und Kolben (14) ausgebildet ist, die Mittel zum Zuführen des zu analysierenden Mediums, zum Zuführen der zuzugebenden Reagenzien und zum Abführen der gemessenen Reaktionsprodukte über eine Bohrung in dem Zylinderkopf (12) mit dem Zylinder (10) kommunizieren, die Lichtquelle (18) küvettenaxial an dem Zylinderkopf (12) oder dem Kolben (14) angeordnet ist, und der photoelektrische Empfänger (16) küvettenaxial am Kolben (14) bzw. am Zylinderkopf (12) angeordnet ist.

*Fig. 1*

EP 0 185 334 A2

Dr. Michael Betz, Hamburger Landstraße 18, 2300 Molfsee

------------------------------------------------------------

Photometer zum Analysieren flüssiger Medien

------------------------------------------------------------

Die Erfindung betrifft ein Photometer zum Analysieren flüssiger Medien nach dem Oberbegriff des Hauptanspruchs.

Derartige Photometer sind aus der DE-OS 22 19 552 und der Zeitschrift "Chemie-Ingenieur-Technik" Jg. 1954, Seiten 401-404 bekannt. Sie dienen dazu, flüssige Medien auf ihre Zusammensetzung zu überwachen, indem das zu untersuchende flüssige Medium in einer Küvette nach Zugabe bestimmter Reagenzien von Licht einer bestimmten Wellenlänge durchstrahlt, der Betrag des transmittierten Lichts gemessen und daraus auf die Art und Menge von in dem Medium gelösten Stoffen geschlossen wird. Dabei ist es für viele Anwendungsfälle erwünscht, daß die Analyse mittels einer kompakten Einheit über einen längeren Zeitraum in regelmäßigen Abständen vollautomatisch erfolgt, wie es bereits in der genannten Literaturstelle vorgeschlagen wird. Bei vollautomatischem Messen stellt sich jedoch das Problem, daß wegen der unterschiedlichen Transmissionseigenschaft der durch Reaktion mit den zugegebenen Reagenzien entstandenen Reaktionsprodukte exakte Meßergebnisse bei konstantem

932

Abstand zwischen Lichtquelle und Lichtempfänger nicht gewährleistet sind.

Der Erfindung liegt daher die Aufgabe zugrunde, ein Photometer zum vollautomatischen Analysieren von flüssigen Medien zu schaffen, bei dem Pumpe, Reaktionsraum und Küvette in einer Einheit zusammengefaßt werden und bei dem der Abstand zwischen Lichtquelle und Lichtempfänger automatisch der jeweils festgestellten Transmission des Reaktionsprodukts angepaßt werden kann.

Erfindungsgemäß wird diese Aufgabe durch die im kennzeichenden Teil des Hauptanspruchs angegebenen Merkmale gelöst, die Unteransprüche kennzeichnen vorteilhafte Ausgestaltungen der Erfindung.

Erfindungsgemäß wird also vorgeschlagen, eine Variabilität der Durchstrahlungsstrecke, die an sich aus der US-PS 4,088,448 bekannt ist, dadurch zu bewirken, daß die Küvette als Pumpküvette ausgebildet ist, bei der die beiden photoelektrischen Elemente im Zylinderkopf bzw. im Kolben angeordnet sind.

Die Erfindung wird anhand eines Ausführungsbeispiels näher erläutert. Dabei zeigt:

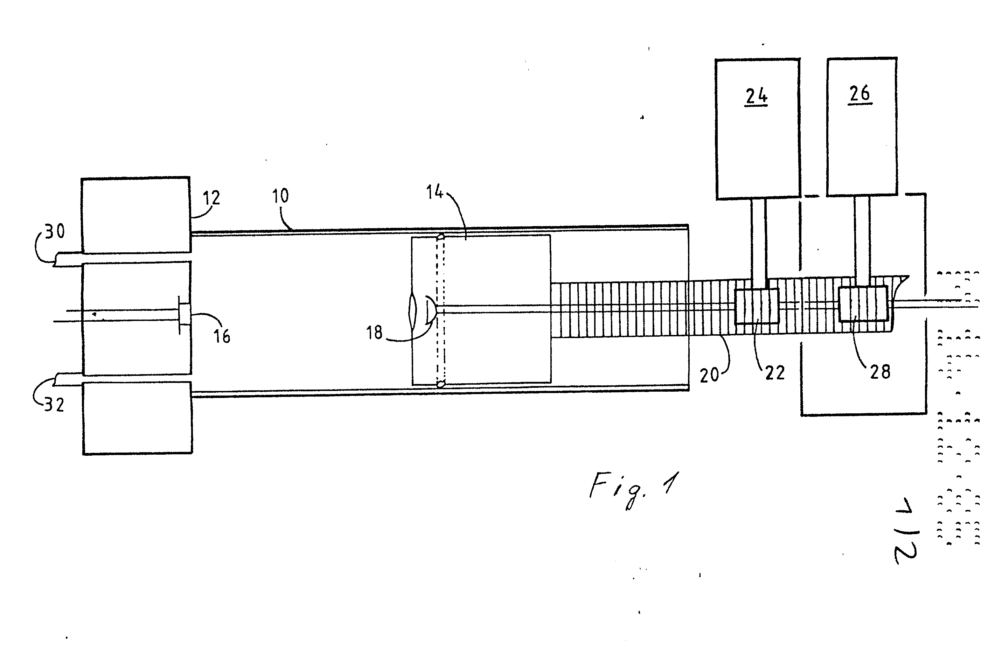

Fig. 1    ein erstes Ausführungsbeispiel eines derartigen Photometers, und

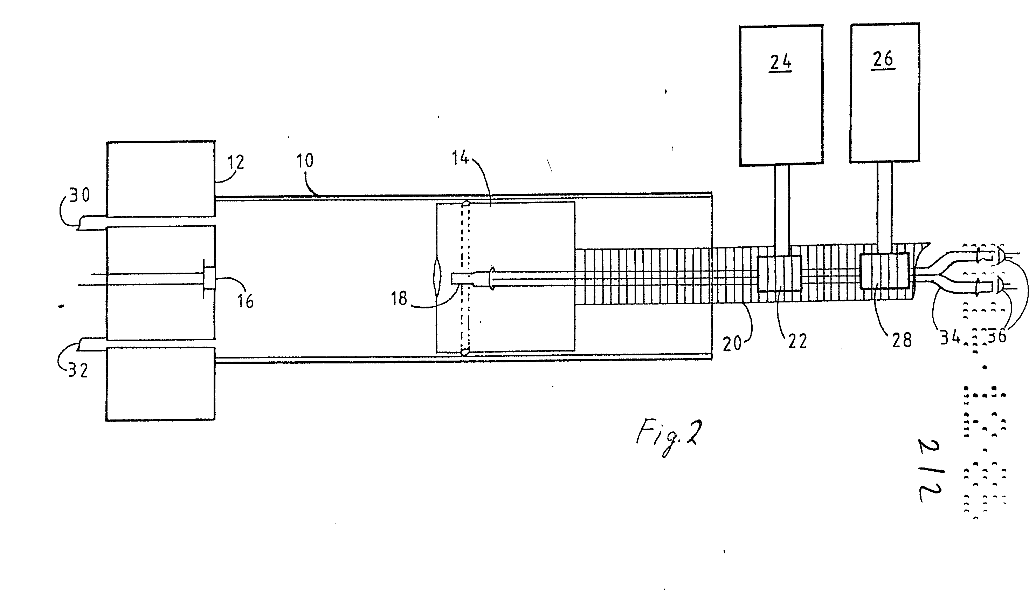

Fig. 2    ein zweites Ausführungsbeispiel eines derartigen Photometers.

Der Zylinderkopf 12 ist mit Bohrungen 30, 32 versehen, die als Leitungen zum Zuführen des zu analysierenden

932

Mediums, zum Zuführen der zuzugebenden Reagenzien und zum Abführen der gemessenen Reaktionsprodukte dienen. Bei dem gezeigten Ausführungsbeispiel ist im Zentrum des Kolbens 14 eine Lichtquelle 18 angeordnet, die auf einen im Zentrum des Zylinderkopfs 12 angeordneten photoelektrischen Empfänger 16 wirkt. Nach Erreichen eines definierten Abstandes zwischen Kolben 14 und Zylinderkopf 12 wird die in dem Kolben 14 angeordnete Lichtquelle 18, bei der es sich um eine LED handeln kann, zur Emission von Licht einer bestimmten Wellenlänge veranlaßt. Dieses durch eine vorgesetzte Sammellinse gebündelte Licht verläuft durch den die Küvette bildenden Zylinder und fällt auf den im Zentrum des Zylinderkopfs 12 angeordneten photoelektrischen Empfänger 16. Der photoelektrische Empfänger 16 mißt so die Transsmission des das Medium durchstrahlenden Lichts bei der jeweiligen, durch den Abstand zwischen Zylinderkopf 12 und Kolben 14 gegebenen Durchstrahlungsstrecke. Der für eine oder für mehrere definierte Durchstrahlungsstrecken ermittelte Transmissionswert wird in einer besonderen Rechenschaltung als Vergleichswert gespeichert, um später mit den Meßergebnissen der Reaktionsprodukte verglichen zu werden.

Zu Beginn der Messung wird die Bohrung 30 über ein - nicht gezeigtes - Mehrweg-Ventil mit dem Probeneinlaß verbunden. Der nahe dem Zylinderkopf 12 angeordnete Kolben 14 wird sodann durch einen Motor 24 mittels eines auf eine Zahnstange 20 wirkenden Ritzels 22 eingezogen, bis der Abstand zwischen dem Zylinderkopf 12 und dem Kolben 14 einen gewünschten Betrag erreicht. Die Stellung des Kolbens 14 wird mittels eines Potentiometers 26 über ein Ritzel 28 und die Zahnstange 20 erfaßt.

932

Bei vorbestimmten Positionen des Kolbens 14 wird eine Messung der Lichttransmission durch die Probe durch Aktivierung der Lichtquelle 18 bzw. 36 und dem Photometer 16 durchgeführt.

Anschließend gibt das Mehrweg-Ventil den Weg zu einem Reagenzvorrat frei, ein erstes Reagenz wird durch die Bohrung 30 in die Pumpküvette durch Einziehen des Kolbens 14 in eine vorgegebene Stellung eingesogen. Sodann wird ein Durchgang zwischen dem Einlaß 30, dem Mehrweg-Venil, einer Mischpumpe und der Bohrung 32 geöffnet, um die Mischung der Probe und des Reagens zu homogenisieren. Dieses Verfahren kann bezüglich weiterer Reagensvorräte jeweils unter Vermischen wiederholt werden, bis alle für den Meßvorgang erforderlichen Reagenzien mit der Probe in der Pumpküvette vermischt sind. Der Inhalt der Pumpküvette reagiert sodann während einer vorgegebenen Zeit. Die Messung wird sodann zwischen Lichtquelle 18 und photoelektrischen Empfänger 16, also zwischen Zylinderkopf 12 und Kolben 14 durchgeführt, indem der Kolben 14 auf die vorher verwendeten Positionen eingestellt wird. Der genaue Abstand zwischen beiden wird mittels des Potentiometers 26 erfaßt. Die zuvor gespeicherten Transmissionswerte werden sodann zur Berechnung der korrigierten Transmissionswerte verwendet, die wiederum mit Eichkoeffizienten verglichen werden.

Anschließend kann das Meßverfahren mit anderen Proben durchgeführt werden. Dabei versteht es sich, daß die hier geschilderten Verfahrensschritte lediglich beispielhaft sind, die Steuerung kann auch anders erfolgen. Um eine exakte Steuerung des Kolbens 14 in dem Zylinder 10 sicherzustellen, wird die Stellung der Kolbenstange 20 von einem Potentiometer 26 abgefragt, was eine Servoschaltung des den Kolben 14 antreibenden Elektromotors 24 ermöglicht. Der Kolben 14 besteht aus einem inerten Material, ein O-Dichtungsring sorgt für eine zuverlässige Abdichtung gegen den Glaskörper des Zylinders 10. Es ist jedoch auch möglich, daß Glasfaserlichtleiter 36 von dem Mittelpunkt des Kolbens 14 durch die Kolbenstange zu Lichtquellen oder Lichtsensoren führen. Obwohl bei dem gezeigten Ausführungsbeispiel der Kolben die Lichtquelle trägt, kann im Kolben auch der Photosensor angeordnet sein.

Das erfindungsgemäße Photometer ermöglicht also, zunächst eine Blindprobe zu messen und den entsprechenden Wert abzuspeichern. Einflüsse durch Trübungen oder Färbungen des zu untersuchenden Mediums werden damit erfaßt. Die Transmission wird anhand der gleichen Probe nach Zusatz von Reagenzien bestimmt und der wahre Wert durch Differenzbildung mit der Blindprobe ermittelt.

Die Anordnung von Lichtquelle und Photosensor erlaubt eine Anpassung der Durchstrahlungsstrecke an die jeweiligen Bedingungen. Eine elektronische Schaltung kann von einer maximalen Lichtstrecke ausgehend eine Kolbenstellung bestimmen, die eine optimale Messung im Geltungsbereich des Beer'schen Gesetzes erlaubt; die bei üblichen Photometern erforderliche Verdünnung der Flüssigkeit bzw. Verwendung unterschiedlicher Küvetten ist bei dem erfindungsgemäßen Photometer nicht erforderlich.

Der kompakte Aufbau des erfindungsgemäßen Photometers ermöglicht es, seine temperaturkritischen Teile mittels besonderer Einrichtungen zu temperieren.

932

Das nach dem vorgeschlagenen Verfahren arbeitende Photometer kann vollautomatisch über längere Zeit Analysen
durchführen. Dabei können durch ein geeignetes Programm
die jeweiligen Analysebedingungen ohne jeden mechanischen Eingriff von außen bestimmt werden. Die Meßergebnisse können gespeichert oder fernabgefragt werden und
zur automatischen Alarmauslösung verwendet werden.

Das vorgestellte Photometer arbeitet wartungsfrei, es
ist lediglich ein regelmäßiger Ersatz der verbrauchten
Reagenzien erforderlich.

932

ANSPRÜCHE
=========

1. Photometer zum Analysieren flüssiger Medien, mit

- einer Küvette zur Aufnahme des zu untersuchenden Mediums,

- Mitteln zum Zuführen des zu analysierenden Mediums,

- Mitteln zum Zuführen der zuzugebenden Reagenzien,

- Mitteln zum Abführen der gemessenen Reaktionsprodukte,

- einer Lichtquelle zum Aussenden von Licht einer bestimmten Wellenlänge und

- einem photoelektrischen Empfänger,

dadurch gekennzeichnet, daß

- die Küvette als Pumpküvette mit Zylinder (10), Zylinderkopf (12) und Kolben (14) ausgebildet ist,

- die Mittel zum Zuführen des zu analysierenden Mediums, zum Zuführen der zuzugebenden Reagenzien und zum Abführen der gemessenen Reaktionsprodukte über eine Bohrung in dem Zylinderkopf (12) mit dem Zylinder (10) kommunizieren,

932

- die Lichtquelle (18) küvettenaxial an dem Zylinderkopf (12) oder dem Kolben (14) angeordnet ist, und

- der photoelektrische Empfänger (16) küvettenaxial am Kolben (14) bzw. am Zylinderkopf (12) angeordnet ist.

2. Photometer nach Anspruch 1 oder 2, dadurch gekennzeichnet, daß die Mittel zum Zuführen des zu analysierenden Mediums, zum Zuführen der zuzugebenden Reagenzien und zum Abführen der gemessenen Reaktionsprodukte ein Mehrwegventil aufweisen.

3. Photometer nach Anspruch 1, dadurch gekennzeichnet, daß der photoelektrische Empfänger (16) bzw. die Lichtquelle (18) im Zentrum des Zylinderkopfs (12) angeordnet ist.

4. Photometer nach einem der vorangehenden Ansprüche, gekennzeichnet durch einen den Kolben (14) über ein Ritzel (22) und eine Zahnstange (20) antreibenden Elektromotor (24).

5. Photometer nach Anspruch 4, gekennzeichnet durch ein die Stellung des Kolbens (14) in dem Zylinder (10) erfassendes, mit einem auf der Zahnstange (20) laufenden Ritzel (28) versehenes Potentiometer (26).

6. Photometer nach Anspruch 1, gekennzeichnet durch Mittel zum Temperieren der zu untersuchenden Probe und der Reagenzien.

7. Photometer nach Anspruch 1, dadurch gekennzeichnet, daß die Lichtquelle (18) aus einer oder mehreren, separat ansteuerbaren LED's besteht.

8. Photometer nach Anspruch 1, dadurch gekennzeichnet, daß die Lichtquelle (18) durch die Lichtaustrittsfläche(n) eines oder mehrerer auf der Eintrittsseite einer bzw. mehrerer separat ansteuerbarer LED's zugewandten Lichtleiter(n) (36) gebildet werden.

932

Fig. 1

0185334

Fig. 2

30

32

12

10

14

18

16

20

22

28

34 36

24

26

212

0185334